# FASCICULE DE BREVET EUROPEEN

(11) **EP 0 559 570 B1**
(45) Date de publication et mention de la délivrance du brevet: **09.10.1996**
(21) Numéro de dépôt: 93400567.9
(22) Date de dépôt: 04.03.1993
(51) Int. Cl.: F16D 3/00, F16D 3/76, B62D 1/16

(54) **Accouplement élastique**
Elastische Kupplung
Elastic coupling

(30) Priorité: 06.03.1992 FR 9202745
(43) Date de publication de la demande: 08.09.1993
(73) Titulaire: NACAM, F-41100 Vendôme (FR)
(72) Inventeur: Foulquier, Jacques, F-41100 Vendôme (FR); Gentet, Frédéric, F-79200 Le Tallud (FR); Perichon, Olivier, F-41100 Vendôme (FR)
(74) Mandataire: Phélip, Bruno

(56) Documents cités:
- EP-A- 0 145 572
- EP-A- 0 430 748
- DE-U- 9 110 049
- FR-A- 866 159
- FR-A- 958 635
- FR-A- 1 205 789
- FR-E- 74 821
- GB-A- 479 377

## Description

La présente invention est relative à un accouplement élastique disposé sur un élément d'un ensemble de transmission de mouvement, qui possède au moins un joint de cardan à une de ses extrémités. L'accouplement élastique selon l'invention est plus particulièrement destiné à être monté sur une colonne de direction de véhicule automobile.

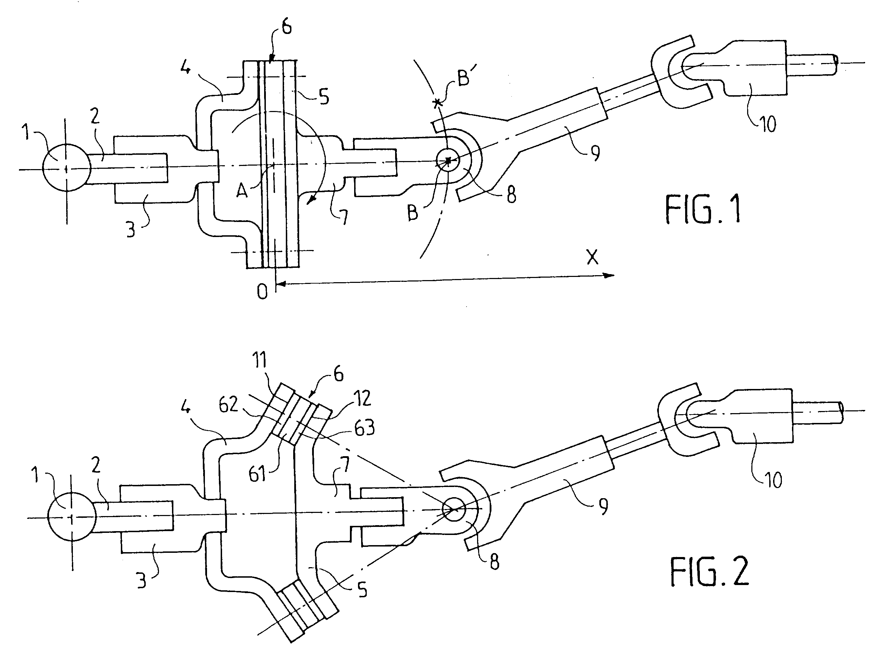

On connait des colonnes de direction de véhicule automobile qui comporte un accouplement élastique comme celui qui est représenté sur la figure 1. Ce type de colonne de direction relie un boîtier de direction au volant. Le boîtier de direction comporte une crémaillère 1 et un pignon 2, sur lequel est monté le premier élément d'un ensemble de transmission, et dont l'autre extrémité se termine par un joint de cardan 8. Un deuxième élément de cet ensemble de transmission comporte un axe intermédiaire 9 qui est disposé entre le joint de cardan 8 et un joint de cardan 10. Afin d'absorber les bruits et les vibrations qui proviennent de la pompe d'assistance de direction, un accouplement élastique est monté sur le premier élément de l'ensemble de transmission, c'est-à-dire entre le pignon 2 et le joint de cardan 8. Cet accouplement élastique 6 possède un plateau d'entrée 4, et un plateau de sortie 5. Le plateau d'entrée 4 est monté sur une bride 3 qui reçoit l'extrémité du pignon du boîtier de direction. Le plateau de sortie 5 possède une bride 7, qui vient s'engager dans la mâchoire du joint de cardan 8. Dans ce type de structure, la technologie de cet élément de transmission fait que le centre de rotation en conique de l'élément élastique 6 se situe à un point A, qui se trouve approximativement sur l'axe de cet élément de transmission. Suivant la constitution de la partie élastique 6, ce point A peut se déplacer sur l'axe et peut avoir une valeur X qui va de 0 lorsque le point A se trouve au centre de l'accouplement élastique, jusqu'à l'infini. Sous l'effet du couple transmis par le conducteur au volant, la partie élastique 6 est soumise à un couple complémentaire C autour du point A. Ce couple complémentaire engendre ainsi une déflection conique du système. Cette déflection conique provoque un déplacement B-B' du centre de joint de cardan 8, c'est-à-dire une rotation centrée sur le point A et de rayon AB. Ce déplacement dû à la rotation donne un encombrement élevé en rotation du joint de cardan 8, qui est incompatible avec la place disponible dans les véhicules modernes. De plus, même si la colonne de direction est agencée de manière que les deux joints de cardan 8 et 10 aient une structure avec des angles qui permettent d'avoir une transmission sensiblement homocinétique, la modification BB' du centre du cardan détruit en partie cet ensemble homocinétique.

Le couple complémentaire qui apparaît dépend de l'angle des joints de cardan, c'est-à-dire de la géométrie de la transmission ainsi que du couple d'entrée qui est appliqué par le conducteur ; et ce couple complémentaire peut atteindre des valeurs qui sont de l'ordre de la moitié du couple à transmettre. Le déplacement du joint de cardan 8, c'est-à-dire de la position de son centre du point B au point B' dépend également du rapport des bras de levier et peut aller à des valeurs relativement importantes qui sont inadmissibles dans les véhicules modernes. La position du point A est aléatoire, et on ne sait jamais exactement où elle est. En effet, dans le cas où le disque en matériau élastique de l'accouplement élastique 6 est très souple au cisaillement et très rigide en compression, le point A se trouve à l'infini, puisqu'il ne peut y avoir que des déplacements dans le sens du cisaillement, c'est-à-dire dans le sens perpendiculaire à l'axe donc sans aucun mouvement de rotation. Au contraire, lorsque le disque élastique de l'accouplement élastique 6 est très rigide au cisaillement et très souple en compression, le point A se trouve au centre de ce disque élastique. Comme on ne connait jamais exactement la structure et les caractéristiques précises de ce disque en matériau élastique, on ne maîtrise pas la position du point A, et le déplacement du point B est toujours relativement important. Afin de pallier à ces inconvénients, les solutions connues tentent d'augmenter la rigidité conique et donc la rigidité torsionnelle, ce qui entraîne l'inconvénient majeur de diminuer les capacités d'absorption des bruits et des vibrations pour lesquels cet accouplement avait été initialement prévu. Enfin, le couple complémentaire varie deux fois par tour avec deux points situés à une valeur maximale, et deux points situés à une valeur minimale, qui sont tous les deux dans le même sens. Ce couple complémentaire et son évolution lors de la rotation, détruisent assez rapidement le caoutchouc de cet accouplement élastique.

Le brevet FR-A-1.205.789, qui représente l'état de la technique, correspondant au préambule de la revendication 1, décrit un accouplement élastique pour arbre à cardan selon lequel le joint de cardan fait partie intégrante du plateau de sortie.

Le but de l'invention est de proposer un accouplement élastique qui évite les inconvénients précédemment décrits, et qui permet d'avoir une position précise du point A afin d'éviter tout débattement, tout en utilisant une partie élastique qui permette d'avoir des capacités d'absorption nécessaires à la filtration des bruits et des vibrations.

L'invention concerne un accouplement élastique disposé sur un élément d'un ensemble de transmission de mouvement, ledit élément possédant un joint de cardan, à au moins une de ses extrémités, l'accouplement élastique comportant un plateau d'entrée et un plateau de sortie entre lesquels est disposée une partie élastique solidarisée entre les deux plateaux, le plateau de sortie étant situé du côté du joint de cardan concerné, la partie périphérique dudit plateau de sortie étant concave et la partie élastique ayant un côté concave coopérant avec le côté externe de ladite partie périphérique par rapport au joint de cardan.

Selon l'invention, le plateau de sortie possède une bride dont l'extrémité est constituée par une tige qui s'engage dans une mâchoire du joint de cardan dans laquelle elle est solidarisée et le centre de concavité de la partie périphérique concave du plateau de sortie et du côté concave de la partie élastique correspond sensiblement au centre de rotation en conique du système, c'est-à-dire le centre du joint de cardan.

Selon un mode de réalisation de l'invention, la partie périphérique du plateau d'entrée, la partie périphérique du plateau de sortie, ainsi que la partie élastique avec lesquelles ces deux parties coopèrent sont sensiblement planes et de forme conique afin d'avoir une forme concave dans le centre de la concavité et sensiblement le centre de rotation en conique du système. Selon un autre mode de réalisation de l'invention, la partie périphérique du plateau d'entrée, la partie périphérique du plateau de sortie ainsi que la partie élastique avec laquelle ces deux parties coopèrent sont sensiblement en forme de portion de sphère afin d'avoir une forme concave dont le centre de la concavité est sensiblement le centre de rotation en conique du sytème.

Préférentiellement selon l'invention, la partie élastique peut avoir plusieurs structures. Dans une première variante de réalisation, la partie élastique est uniquement constituée en matériau élastique de manière à être adhérisé directement sur le côté interne du plateau d'entrée et sur le côté externe du plateau de sortie. Dans une deuxième variante de réalisation, la partie élastique a un élément en matériau élastique de manière à être adhérisée directement sur le côté externe du plateau de sortie, et à être adhérisée directement sur un plateau intermédiaire qui vient s'appliquer contre le côté interne du plateau d'entrée, ce plateau intermédiaire étant solidarisé au plateau d'entrée par des moyens d'assemblage. Dans une troisième variante de réalisation, la partie élastique a un élément en matériau élastique de manière à être adhérisée directement sur le côté interne du plateau d'entrée, et à être adhérisée directement sur un plateau intermédiaire qui vient s'appliquer contre le côté externe du plateau de sortie, ce plateau intermédiaire étant solidarisé au plateau de sortie par des moyens d'assemblage. Enfin dans une quatrième variante de réalisation, la partie élastique a un élément en matériau élastique de manière à être adhérisée directement à deux plateaux intermédiaires, qui viennent s'appliquer respectivement contre le côté interne du plateau d'entrée et contre le côté externe du plateau de sortie, chacun de ces plateaux intermédiaires étant solidarisé respectivement au plateau d'entrée et au plateau de sortie par des moyens d'assemblage. Pour ces trois dernières variantes de réalisation de la partie élastique, les moyens d'assemblage sont avantageusement constitués par des rivets, qui traversent le plateau d'entrée, la partie élastique et le plateau de sortie.

L'accouplement élastique constitué selon l'invention, est particulièrement intéressant pour être monté dans une colonne de direction de véhicule automobile. Dans ce type d'application, le plateau d'entrée comporte une bride qui est solidaire du pignon du boîtier de direction, et le plateau de sortie comporte une bride qui est munie d'une tige solidaire de la mâchoire du joint de cardan.

Dans ce type d'application, la bride du plateau d'entrée a préférentiellement la forme d'un moyeu fendu en partie dans le sens axial et dans une zone qui est en dehors de la zone de liaison avec le plateau d'entrée. Cette fente permet d'obtenir les deux parties d'une pince qui viennent se bloquer sur l'arbre du pignon du, boîtier de direction par une vis d'assemblage, qui est sécante avec cet arbre. Afin d'améliorer encore les caractéristique de cet ensemble, l'arbre du pignon du boîtier de direction est solidarisé en rotation avec la bride du plateau d'entrée au moyen de deux méplats qui sont aménagés sur l'arbre du pignon, et qui coopèrent avec deux formes conjuguées aménagées dans la bride du plateau d'entrée.

L'accouplement élastique selon l'invention présente ainsi l'avantage déterminant de préciser de façon exacte la position du centre de rotation en conique du système, qui se trouve de préférence au centre du joint de cardan. De ce fait, le centre de rotation est imposé, et le déplacement du joint de cardan est quasiment nul. En conséquence, l'encombrement de l'ensemble du système dans la zone du cardan est réduit et ramené à l'encombrement théorique. De plus, la non-homocinétie n'est pas augmentée, et elle est identique à un système qui n'aurait pas d'accouplement élastique. Enfin, il est possible grâce à la structure de cet accouplement élastique d'avoir la possibilité de diminuer la rigidité conique et torsionnelle à la valeur voulue, afin d'augmenter les capacités d'absorption des bruits et des vibrations de cet élément élastique et de répondre au cahier des charges des colonnes de direction sur les voitures actuelles.

D'autres caractéristiques et avantages de l'invention ressortiront de la description qui va suivre, données à titre d'exemples nullement limitatifs, en référence aux dessins annexés sur lesquels :
- la figure 1 est une vue d'ensemble schématique d'une transmission de colonne de direction de véhicule automobile d'un système connu ;
- la figure 2 est une vue schématique dans le sens axial d'un ensemble de colonnes de direction de véhicules automobiles comportant un accouplement élastique selon l'invention ;
- la figure 3 est une coupe axiale d'un mode de réalisation de l'accouplement élastique selon l'invention;
- la figure 3a montre une variante de réalisation de la partie élastique de l'accouplement élastique représenté sur la figure 3 ;
- la figure 4 est une coupe transversale suivant IV-IV de la figure 3.

L'accouplement élastique selon l'invention est disposé sur un élément d'un ensemble de transmission de mouvement, qui possède au moins un joint de cardan 8 à une de ses extrémités. Cet accouplement élastique est plus particulièrement monté sur une colonne de direction de véhicule automobile, comme cela est représenté sur la figure 2. Dans ce type de transmission, l'accouplement élastique est disposé entre le boîtier de direction et le joint de cardan 8. Un deuxième élément de la transmission est constitué par un axe intermédiaire 9, dont une des extrémités est le joint de cardan 8, et dont l'autre extrémité est le joint de cardan 10 relié au volant du conducteur. L'accouplement élastique comporte essentiellement un plateau d'entrée 4, et un plateau de sortie 5, entre lesquels est disposée une partie élastique 6, qui est solidarisée à ces deux plateaux 4 et 5. Le plateau d'entrée 4 comporte une bride 3 qui est solidaire du pignon 2 du boîtier de direction entraîné par la crémaillère 1. Le plateau de sortie 5 comporte une bride 7, solidaire du joint de cardan 8.

Afin de préciser la position exacte du centre de rotation en conique du système, la partie élastique 6 est de forme concave ainsi que la partie périphérique du plateau d'entrée 4 et que la partie périphérique du plateau de sortie 5, qui sont situées l'une et l'autre en face de la partie élastique 6. La partie élastique 6 coopère avec la partie périphérique du plateau d'entrée 4 et avec la partie périphérique du plateau de sortie 5, et le centre de la concavité de ces différentes parties correspond au centre de rotation en conique du système. De plus, le centre de la concavité est situé du côté du plateau de sortie 5 dans la zone du centre du joint de cardan 8, et de façon idéale exactement à la position de ce centre.

Dans les différentes figures représentées sur les dessins, la partie périphérique du plateau d'entrée 4, la partie périphérique du plateau de sortie 5, ainsi que la partie élastique 6 avec laquelle ces deux parties périphériques coopèrent sont sensiblement planes et de forme conique. Cette forme conique est dimensionnée de façon que ces différentes parties aient une forme concave dont le centre de la concavité soit sensiblement le centre de rotation en conique du système, c'est-à-dire le centre du joint de cardan 8.

Tout en restant dans le cadre de l'invention, dans un autre mode de réalisation non-représenté sur les figures, la partie périphérique du plateau d'entrée 4, la partie périphérique du plateau de sortie 5, ainsi que la partie élastique 6 avec laquelle ces deux parties coopèrent sont sensiblement en forme de portion de sphère. La dimension de cette portion de sphère est établie de façon à avoir une forme concave dans le centre de la concavité est sensiblement le centre de rotation en conique du système.

Dans un premier mode de réalisation non-représenté sur les figures, la partie élastique 6 est uniquement constituée en matériau élastique, de manière à être adhérisée directement sur le côté interne du plateau d'entrée 4 et sur le côté externe du plateau de sortie 5.

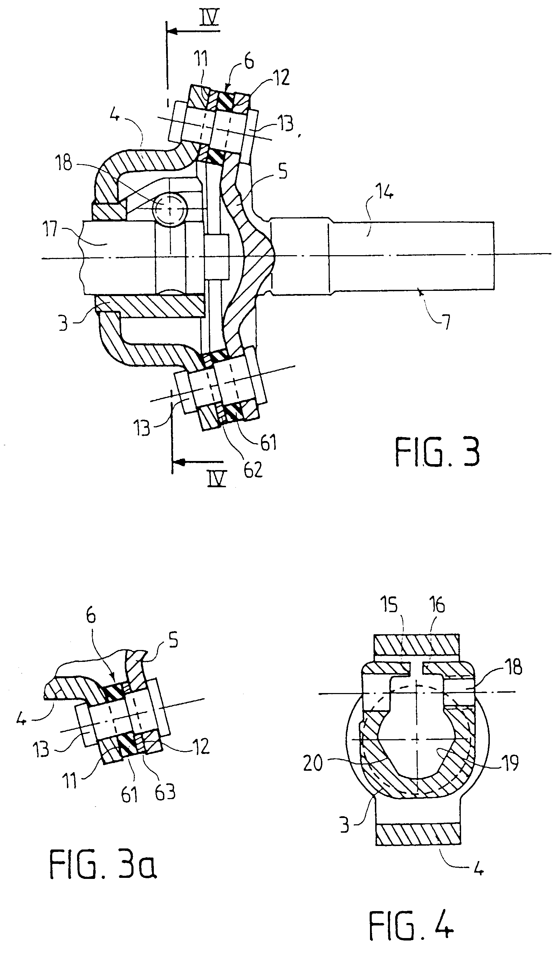

Dans un deuxième mode de réalisation représenté sur la figure 3, la partie élastique 6 a un élément en matériau élastique 61 et un plateau intermédiaire 62. L'élément en matériau élastique 61 est adhérisé directement sur le côté externe 12 du plateau de sortie 5, et il est adhérisé directement sur le plateau intermédiaire 62. Ce plateau intermédiaire 62 vient s'appliquer à son tour contre le côté interne 11 du plateau d'entrée 4. Le plateau intermédiaire 62 est solidarisé au plateau d'entrée 4 par des moyens d'assemblage qui sont constitués par des rivets 13. Ces rivets 13 traversent le plateau d'entrée 4, la partie élastique 6 et le plateau de sortie 5.

Selon un troisième mode de réalisation représenté sur la figure 3a, la partie élastique à un élément en matériau élastique 61, et un plateau intermédiaire 63. L'élément en matériau élastique 61 est adhérisé directement sur le côté interne 11 du plateau d'entrée 4, et il est adhérisé directement sur le plateau intermédiaire 63. Ce plateau intermédiaire 63 vient s'appliquer à son tour contre le côté externe 12 du plateau de sortie 5. Le plateau intermédiaire 63 est solidarisé au plateau de sortie 5 par des moyens d'assemblage qui sont constitués par des rivets 13. Ces rivets 13 traversent le plateau d'entrée 4, la partie élastique 6 et le plateau de sortie 5.

Un quatrième mode de réalisation de la partie élastique est représenté schématiquemet sur la figure 2. La partie élastique 6 a un élément en matériau élastique 61, et deux plateaux intermédiaires 62 et 63, qui sont disposés de part et d'autre de cet élément élastique 61. L'élément en matériau élastique 61 est adhérisé directement au plateau intermédiaire 62, et il est également adhérisé directement au plateau intermédiaire 63. Le plateau intermédiaire 62 vient s'appliquer contre le côté interne 11 du plateau d'entrée 4, et le plateau intermédiaire 63 vient s'appliquer contre le côté externe 12 du plateau de sortie 5. Chacun de ces plateaux intermédiaires 62 et 63 sont ensuite respectivement solidarisés avec le plateau d'entrée 4 et avec le plateau de sortie 5 par des moyens d'assemblage, qui sont constitués par des rivets, comme les rivets 13 représentés sur les figures 3 et 3a. Ces rivets traversent le plateau d'entrée 4, la partie élastique 6 et le plateau de sortie 5.

Comme on peut le voir sur la figure 2, l'accouplement élastique selon l'invention est monté dans une colonne de direction de véhicule automobile et il a le plateau d'entrée 4 qui comporte une bride 3 solidaire du pignon 2 du boîtier de direction, qui est lui-même entraîné par la crémaillère 1. Le plateau de sortie 5 comporte une bride 7 solidaire de la mâchoire du joint de cardan 8.

Dans le mode de réalisation de l'invention représenté sur la figure 3, le plateau d'entrée 4 a une bride 3 montée à l'intérieur de ce plateau, et qui a la forme d'un moyeu fendu en partie dans le sens axial. La partie de ce moyeu qui est fendue est située en dehors de la zone de liaison de ce moyeu avec le plateau d'entrée 4. La fente axiale disposée sur ce moyeu permet d'avoir les deux parties 15 et 16 d'une pince. Ces deux parties 15 et 16 viennent se bloquer sur l'arbre 17 du pignon du boîtier de direction comme on peut également le voir sur la figure 4. Une vis d'assemblage 18 traverse un trou de passage aménagé dans la partie 15 pour venir s'engager dans un trou taraudé aménagé dans la partie 16. De plus, dans le plan de cette vis d'assemblage 18, l'arbre 17 du pignon 2 du boîtier de direction possède une gorge circulaire, de manière que la vis d'assemblage 18 soit sécante avec cet arbre 17.

L'arbre 17 du pignon 2 de boîtier de direction possède également deux méplats, référencés 19 qui coopèrent avec deux formes 20 aménagées dans la bride 3 et qui ont une forme conjuguée avec ces deux méplats 19. De cette façon, la position de l'arbre 17 du pignon 2 du boîtier de direction est parfaitement solidarisée en rotation avec la bride 3 du plateau d'entrée 4 de l'accouplement élastique.

Le plateau de sortie 5 quant à lui possède la bride 7, dont l'extrémité est constituée par une tige 14 qui vient s'engager dans la mâchoire du joint de cardan 8 avec laquelle elle est solidarisée.

Dans toute la description de l'invention exposée ci-dessus, il faut entendre par plateau de sortie le plateau situé du côté du joint de cardan intéressé, c'est-à-dire le plateau le plus proche de ce joint de cardan. Il faut également rappeler, que selon l'invention, l'accouplement élastique peut être situé sur un autre élément de la colonne de direction, c'est-à-dire entre deux joints de cardan ou entre le volant et le joint de cardan supérieur.

Un autre mode de réalisation de l'invention non représenté sur les figures se rapporte à un accouplement élastique conçu de manière à avoir uniquement le plateau de sortie 5 de forme concave, c'est-à-dire le plateau situé du côté du joint de cardan intéressé. Dans ce cas, la partie élastique 6 a une seule forme concave, c'est-à-dire un seul côté de forme concave qui est celui qui coopère avec la partie périphérique du plateau de sortie 5, c'est-à-dire le côté externe 12 de ce plateau de sortie 5.

## Revendications

1. Accouplement élastique disposé sur un élément d'un ensemble de transmission de mouvement, ledit élément possédant un joint de cardan (8) à au moins une de ses extrémités, l'accouplement élastique comportant un plateau d'entrée (4) et un plateau de sortie (5) entre lesquels est disposée une partie élastique (6) solidarisée entre les deux plateaux (4, 5), le plateau de sortie (5) étant situé du côté du joint de cardan concerné, la partie périphérique dudit plateau de sortie étant concave et la partie élastique (6) ayant un côté concave coopérant avec le côté externe (12) de ladite partie périphérique par rapport au joint de cardan, caractérisé en ce que le plateau de sortie (5) possède une bride (7) dont l'extrémité est constituée par une tige (14) qui s'engage dans une mâchoire du joint de cardan (8) dans laquelle elle est solidarisée, et que le centre de concavité de la partie périphérique concave du plateau de sortie et du côté concave de la partie élastique correspond sensiblement au centre de rotation en conique du système, c'est-à-dire le centre du joint de cardan (8).

2. Accouplement élastique selon la revendication 1, caractérisé en ce que le partie périphérique du plateau d'entrée (4), la partie périphérique du plateau de sortie (5) ainsi que la partie élastique (6) avec laquelle ces deux parties coopèrent sont sensiblement planes et de forme conique afin d'avoir une forme concave dont le centre de la concavité est sensiblement le centre de rotation en conique du système.

3. Accouplement élastique selon la revendication 1, caractérisé en ce que la partie périphérique du plateau d'entrée (4), la partie périphérique du plateau de sortie (5) ainsi que la partie élastique (6) avec laquelle ces deux parties coopèrent sont sensiblement en forme de portion de sphère afin d'avoir une forme concave dont le centre de la cavité est sensiblement le centre de rotation en conique du système.

4. Accouplement élastique selon l'une quelconque des revendications précédentes, caractérisé en ce que la partie élastique (6) est uniquement constituée en matériau élastique de manière à être adhérisée directement sur le côté interne du plateau d'entrée (4) et sur le côté externe du plateau de sortie (5).

5. Accouplement élastique selon l'une quelconque des revendications 1 à 3, caractérisé en ce que la partie élastique (6) a un élément en matériau élastique (61) de manière à être adhérisé directement sur le côté externe 12 du plateau de sortie (5) et à être adhérisé directement sur un plateau intermédiaire (62) qui vient s'appliquer contre le côté interne (11) du plateau d'entrée (4), ce plateau intermédiaire (62) étant solidarisé au plateau d'entrée (4) par des moyens d'assemblage.

6. Accouplement élastique selon l'une quelconque des revendications 1 à 3, caractérisé en ce que la partie élastique a un élément en matériau élastique (61) de manière à être adhérisé directement sur le côté interne (11) du plateau d'entrée (4) et à être adhérisé directement sur le plateau intermédiaire (63) qui vient s'appliquer contre le côté externe (12) du plateau de sortie (5), ce plateau intermédiaire (63) étant solidarisé au plateau de sortie (5) par des moyens d'assemblage.

7. Accouplement élastique selon l'une quelconque des revendications 1 à 3, caractérisé en ce que la partie élastique a un élément en matériau élastique (61) de manière à être adhérisé directement à deux plateaux intermédiaires (62) et (63), qui viennent s'appliquer respectivement contre le côté interne (11) du plateau d'entrée (4) et contre le côté externe (12) du plateau de sortie (5), chacun de ces plateaux intermédiaires (62) et (63) étant solidarisé respectivement aux plateaux d'entrée (4) et au plateau de sortie (5) par des moyens d'assemblage.

8. Accouplement élastique selon l'une quelconque des revendications 5, 6 et 7, caractérisé en ce que les moyens d'assemblage sont constitués par des rivets (13) traversant le plateau d'entrée (4), la partie élastique (6) et le plateau de sortie (5).

9. Colonne de direction de véhicule automobile comprenant un accouplement élastique selon l'une quelconque des revendications précédentes, monté sur ladite colonne.

10. Colonne de direction de véhicule automobile selon la revendication 9, caractérisé en ce que le plateau d'entrée (4) comporte une bride (3) solidaire du pignon (2) du boîtier de direction.

11. Colonne de direction de véhicule automobile selon la revendication 10, caractérisé en ce que la bride (3) du plateau d'entrée (4) a la forme d'un moyeu fendu en partie dans le sens axial en dehors de la zone de liaison avec le plateau d'entrée (4), de façon à constituer les deux parties (15) et (16) d'une pince qui viennent se bloquer sur l'arbre (17) du pignon (2) du boîtier de direction par une vis d'assemblage (18) sécante avec cet arbre (17).

12. Colonne de direction de véhicule automobile selon la revendication 11, caractérisé en ce que l'arbre (17) du pignon (2) du boîtier de direction est solidarisé en rotation avec la bride (3) du plateau d'entrée (4) au moyen de deux méplats (19) aménagés sur l'arbre (17) du pignon qui coopèrent avec deux formes (20) conjuguées aménagées dans la bride (3).

## Patentansprüche

1. Elastische Kupplung, angordnet auf einem Element einer Bewegungsübertragungsanlage, die wenigstens ein Kardangelenk (8) an einem ihrer Enden besitzt, wobei diese elastische Kupplung ein Eingangsplateau (4) und ein Ausgangsplateau (5) aufweist, zwischen denen ein mit den beiden Plateaus (4) und (5) verbundenes elastisches Teil (6) angeordnet ist, das Ausgangsplateau (5) auf der Seite des betreffenden Kardangelenks liegt, und der eine konkave Form aufweisende periphere Teil des Ausgangsplateau und das eine konkave Seite aufweisende elastische Teil (6) mit der in Bezug auf das Kardangelenk außenliegenden Seite (12) des peripheren Teils zusammenwirkt, dadurch gekennzeichnet, daß das Ausgangsplateau (5) einen Flansch (7) aufweist, dessen Ende von einem Schaft (14) gebildet wird, der in eine Klemme des Kardangelenks (8) eingreift, in der er befestigt ist, und daß das Zentrum der Konkavität des konkaven peripheren Teils des Ausgansplateaus und der konkaven Seite des elastischen Teils im wesentlichen dem Zentrum der Konizitätsrotation des Systems, das heißt, dem Zentrums des Kardangelenks (8), entspricht.

2. Elastische Kupplung nach Anspruch 1, dadurch gekennzeichnet, daß das periphere Teil des Eingangsplateaus (4), das periphere Teil des Ausgangsplateaus (5) sowie das elastische Teil (6), mit dem diese beiden Teile zusammenwirken, im wesentlichen eben und von konischer Form sind, um eine konkave Form zu erhalten, deren Konkavitätszentrum im wesentlichen das Zentrum der Konizitätsrotation des Systems ist.

3. Elastische Kupplung nach Anspruch 1, dadurch gekennzeichnet, daß das periphere Teil des Eingangsplateaus (4), das periphere Teil des Ausgangsplateaus (5) sowie das elastische Teil (6), mit dem diese beiden Teile zusammenwirken, im wesentlichen von teilweise sphärischer Form sind, um eine konkave Form zu erhalten, deren Konkavitätzentrum im wesentlichen das Zentrum der Konizitätsrotation des Systems ist.

4. Elastische Kupplung nach einem der vorangehenden Ansprüche, dadurch gekennzeichent, daß das elastische Teil einzig aus elastischem Material derart gebildet ist, daß es unmittelbar auf die Innenseite des Eingangsplateaus (4) und auf die Außenseite des Ausgangsplateaus (5) geklebt werden kann.

5. Elastische Kupplung nach einem der Ansprüche 1 - 3, dadurch gekennzeichnet, daß das elastische Teil (6) ein Element aus elastischem Material (61) derart aufweist, daß es unmittelbar an die Außenseite (12) des Ausgangsplateaus geklebt werden kann und unmittelbar auf ein Zwischenplateau (62) geklebt werden kann, das zur Anlage gegen die Innenseite (11) des Eingangplateaus (4) vorgesehen und am Eingangsplateau (4) durch Montagemittel angebracht ist.

6. Elastische Kupplung nach einem der Ansprüche 1 - 3, dadurch gekennzeichnet, daß des elastische Teil ein Element aus elastischem Material (61) derart aufweist, daß es unmittelbar auf die Innenseite (11) des Eingangsplateaus (4) geklebt werden kann und unmittelbar auf ein Zwischenplateau (63) geklebt werden kann, das zur Anlage gegen die Außenseite (12) des Ausgangsplateaus (5) vorgesehen und am Ausgangsplateau (5) durch Montagemittel angebracht ist.

7. Elastische Kupplung nach einem der Ansprüche 1-3, dadurch gekennzeichnet, daß das elastische Teil ein Element aus elastischem Material (61) derart aufweist, daß es unmittelbar an zwei Zwischenplateaus (62, 63) geklebt werden kann, die zur Anlage gegen die Innenseite (11) des Eingangsplateaus (4) beziehungsweise am Ausgangsplateau (5) durch Montagemittel angebracht sind.

8. Elastische Kupplung nach einem der Ansprüche 5, 6 und 7, dadurch gekennzeichnet, daß die Montagemittel durch Nieten (13) gebildet sind, welche das Eingangsplateau (4), das elastische Teil (6) und das Ausgangsplateau (5) durchdringen.

9. Lenksäule eines Kraftfahrzeugs mit einer elastischen Kupplung nach einem der vorangehenden Ansprüche, die in der Lenksäule montiert ist.

10. Lenksäule eines Kraftfahrzeugs nach Anspruch 9, dadurch gekennzeichent, daß das Eingangsplateau (4) einen Flansch (3) aufweist, der mit einem Ritzel (2) des Lenkgehäuses verbunden ist.

11. Lenksäule eines Kraftfahrzeugs nach Anspruch 10, dadurch gekennzeichent, daß der Flansch (3) des Eingangsplateaus (4) die Form einer Nabe aufweist, die teilweise in axialer Richtung außerhalb des Verbindungsbereiches mit dem Eingangsplateau (4) gespalten ist, so daß die beiden Teile (15) und (16) einer Zange gebildet werden, die auf der Welle (17) des Ritzels (2) des Lenkgehäuses durch eine Montageschraube (18) festgeklemmt sind, die sich mit der Welle (17) schneidet.

12. Lenksäule eines Kraftfahrzeugs nach Anspruch 11, dadurch gekennzeichent, daß die Welle (17) des Ritzels (2) des Lenkgehäuses mit dem Flansch (3) des Eingangsplateaus (4) mitteles zweier auf der Welle (17) des Ritzels ausgebildeter Abflachungen (19) drehverbunden ist, die mit zwei Gegenformen (20) zusammenwirken, die im Flansch (3) ausgebildet sind.

## Claims

1. Elastic coupling arranged on an element of a movement-transmission assembly which has at least one universal joint (8) at one of its ends, this elastic coupling including an input plate (4) and an output plate (5) between which is arranged an elastic part (6) secured to the two plates (4) and (5), the output plate (5) being located on the side of the universal joint in question, and the peripheral part of the output plate which has a concave shape, and the elastic part (6) which has a concave side interacting with the outside of the peripheral part of the output plate (5) with respect to the universal joint, characterized in that the output plate (5) comprises a collar (7) with a rod (14) which is engaged inside a jaw of the universal joint (8) which it is secured to, and in that the center of the concavity of the concave peripheral part of the output plate and the concave side of the elastic part corresponds substantially to the center of conical rotation of the system, i.e. the center of the universal joint (8).

2. Elastic coupling according to claim 1, characterized in that the peripheral part of the input plate (4), the peripheral part of the output plate (5), as well as the elastic part (6) with which these two parts interact, are substantially planar and of conical shape so as to have a concave shape the center of the concavity of which is substantially the center of conical rotation of the system.

3. Elastic coupling according to claim 1, characterized in that the peripheral part of the input plate (4), the peripheral part of the output plate (5), as well as the elastic part (6) with which these two parts interact are substantially in the form of a portion of a sphere so as to have a concave shape the center of the concavity of which is substantially the center of conical rotation of the system.

4. Elastic coupling according to any one of the preceding claims, characterized in that the elastic part (6) consists solely of an elastic material so as to be bonded directly onto the internal side of the input plate (4) and onto the external side of the output plate (5).

5. Elastic coupling according to any one of claims 1 to 3, characterized in that the elastic part (6) has an element made from an elastic material (61) so as to be bonded directly onto the external side (12) of the output plate (5) and to be bonded directly onto an intermediate plate (62) which is pressed against the internal side (11) of the input plate (4), this intermediate plate (62) being secured to the input plate (4) by assembly means.

6. Elastic coupling according to any one of Claims 1 to 3, characterized in that the elastic part has an element made from an elastic material (61) so as to be bonded directly onto the internal side (11) of the input plate (4) and to be bonded directly onto an intermediate plate (63) which is pressed against the external side (12) of the output plate (5), this intermediate plate (63) being secured to the output plate (5) by assembly means.

7. Elastic coupling according to any one of Claims 1 to 3, characterized in that the elastic part has an element made from an elastic material (61) so as to be bonded directly onto two intermediate plates (62) and (63), which are pressed respectively against the international side (11) of the input plate (4), and against the external side (12) of the output plate (5), each of these intermediate plates (62) and (63) being secured respectively to the input plate (4) and to the output plate (5) by assembly means.

8. Elastic coupling according to any one of Claims 5, 6 and 7, characterized in that the assembly means consist of rivets (13) passing through the input plate (4), the elastic part (6), and the output plate (5).

9. Motor vehicle steering column with an elastic coupling according to any one of the preceding claims which is mounted in said steering column.

10. Motor vehicle steering column according to claim 9, characterized in that the input plate (4) includes a collar (3) secured to the pinion (2) of the steering box.

11. Motor vehicle steering column according to claim 10, characterized in that the collar (3) of the input plate (4) has the shape of a hub which is partly slit in the axial direction outside the zone of connection to the input plate (4) so as to constitute the two parts (15) and (16) of a clamp which become blocked on the shaft (17) of the pinion (2) of the steering block using an assembly screw (18) which is secant to the shaft (17).

12. Motor vehicle steering column with elastic coupling according to claim 11, characterized in that the shaft (17) of the pinion (2) of the steering box is rotationally secured to the collar (3) of the input plate (4) by means of two flats (19) formed on the shaft (17) of the pinion which flats interact with two conjugate shapes (20) formed in the collar (3).
